# EUROPEAN PATENT APPLICATION

(11) **EP 4 832 106 A1**
(43) Date of publication of application: **28.10.2026**
(21) Application number: 24908283.5
(22) Date of filing: 16.12.2024
(51) Int. Cl.: H01M 4/525, H01M 4/36, H01M 4/505, H01M 4/131, H01M 10/052, H01M 4/02

(54) **POSITIVE ELECTRODE ACTIVE MATERIAL FOR LITHIUM SECONDARY BATTERY AND LITHIUM SECONDARY BATTERY COMPRISING SAME**

(30) Priority: 18.12.2023 KR 20230185008
(71) Applicant: POSCO Holdings Inc., Pohang-si, Gyeongsangbuk-do 37859 (KR)
(72) Inventor: HONG, Kijoo, Pohang-si, Gyeongsangbuk-do 37859 (KR)
(74) Representative: Pfenning, Meinig & Partner mbB
(86) International application number: PCT/KR2024/097014
(87) International publication number: WO 2025/136001

(57) **Abstract**

A positive electrode active material for a lithium secondary battery according to one embodiment is a nickel-containing layered lithium transition metal oxide, and is composed of single particles including at least one of a single particle formed of one primary particle and a quasi-single particle formed by aggregation of a plurality of the primary particles, wherein the single particles include, on average, 5 to 15 primary particles, have an average particle diameter (D50) of 5 µm to 8 µm, and may have an average circularity of 0.75 or more.

## Description

### [TECHNICAL FIELD]

The present embodiment relates to a positive electrode active material for a lithium secondary battery and a lithium secondary battery including the same.

### [BACKGROUND ART]

As supply of electric vehicles for carbon neutrality is expanding and demand for energy storage devices such as ESS for use of renewable energy is rapidly increasing, lithium ion batteries are becoming irreplaceable core energy storage devices. In particular, since characteristics of lithium ion batteries are greatly affected by positive electrode materials, research on positive electrode materials accounts for the largest proportion in lithium ion battery research.

Among positive electrode materials, research on NCM positive electrode materials in which cobalt and manganese are substituted in nickel-based positive electrode active materials having a layered structure is active, and among these, secondary-particle active materials formed by aggregation of primary particles have conventionally been widely studied. However, such secondary-particle active materials have problems such as lifespan deterioration due to cracks and gas generation because they have a large specific surface area and low particle strength. Accordingly, development has been proceeding toward single-particle positive electrode materials, and they are mainly produced as small-particle-diameter positive electrode materials having an average particle diameter of about 3 to 4 µm in bimodal positive electrode materials.

The small-particle-diameter single particles have excellent mechanical particle strength characteristics, and thus have excellent lifespan and stability. However, since the particle size is small, tap density is low, and as a result, there has been a limitation in increasing electrode energy density.

To solve this, attempts have been made to increase the particle diameter of single particles to increase tap density. However, when the particle diameter of single particles increases, the lithium ion movement distance increases accordingly, and therefore there is a problem in that electrochemical characteristics such as capacity and charge/discharge efficiency deteriorate.

### [DETAILED DESCRIPTION OF THE INVENTION]

### [Technical Problem]

The present embodiment is intended to provide a positive electrode active material for a lithium secondary battery in a single-particle form, which can not only increase electrode density but also improve capacity and charge/discharge efficiency of a battery, and a lithium secondary battery including the same.

### [Technical Solution]

A positive electrode active material for a lithium secondary battery according to one embodiment is a nickel-containing layered lithium transition metal oxide, and is composed of single particles including at least one of a single particle formed of one primary particle and a quasi-single particle formed by aggregation of a plurality of the primary particles, wherein the single particles include, on average, 5 to 15 primary particles, have an average particle diameter (D50) of 5 µm to 8 µm, and may have a circularity of 0.75 or more.

A positive electrode for a lithium secondary battery according to another embodiment may include the positive electrode active material according to one embodiment.

A lithium secondary battery according to still another embodiment may include the positive electrode according to one embodiment.

### [Advantageous Effects]

The present embodiments have excellent circularity and an average particle diameter in a range larger than that of conventional small-particle-diameter single particles, thereby improving electrode density.

In addition, by appropriately controlling the average number of primary particles included in the single particles, capacity, charge/discharge efficiency, and lifespan characteristics of a lithium secondary battery can be improved.

### [BRIEF DESCRIPTION OF THE DRAWINGS]

FIG. 1 is a schematic view of a quasi-single particle included in a positive electrode active material for a lithium secondary battery according to one embodiment.
FIGS. 2 to 4 exemplarily show SEM images for explaining a method of measuring circularity.
FIG. 5 is an SEM image of a positive electrode active material manufactured according to Example 1.
FIG. 6 is an SEM image of a positive electrode active material manufactured according to Example 2.
FIG. 7 is an SEM image of a positive electrode active material manufactured according to Example 3.
FIG. 8 is an SEM image of a positive electrode active material manufactured according to Example 4.
FIG. 9 is an SEM image of a positive electrode active material manufactured according to Example 5.
FIG. 10 is an SEM image of a positive electrode active material manufactured according to Example 6.
FIG. 11 is an SEM image of a positive electrode active material manufactured according to Comparative Example 1.
FIG. 12 is an SEM image of a positive electrode active material manufactured according to Comparative Example 2.
FIG. 13 is an SEM image of a positive electrode active material manufactured according to Comparative Example 3.
FIG. 14 is an SEM image of a positive electrode active material manufactured according to Comparative Example 4.
FIG. 15 is an SEM image of a positive electrode active material manufactured according to Comparative Example 5.
FIG. 16 is an SEM image of a positive electrode active material manufactured according to Comparative Example 6.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### Positive Electrode Active Material for Lithium Secondary Battery

A positive electrode active material for a lithium secondary battery according to one embodiment is a nickel-containing layered lithium transition metal oxide, and is composed of single particles including at least one of a single particle formed of one primary particle and a quasi-single particle formed by aggregation of a plurality of the primary particles, wherein the single particles include, on average, 5 to 15 primary particles, have an average particle diameter (D50) of 5 to 8 µm, and may have a circularity of 0.75 or more.

The positive electrode active material for a lithium secondary battery of the present embodiment may include at least one of a single particle formed of one primary particle and a quasi-single particle formed by aggregation of the primary particles. At this time, the primary particles included in the quasi-single particle may be in a rod form.

In the present specification, "single particle" is a term used to distinguish from conventional positive electrode active material particles in the form of secondary particles formed by aggregation of several tens to several hundreds of primary particles, and is a concept including a single particle formed of one primary particle and aggregate particles of 30 or fewer primary particles. The "secondary particle" means an aggregate in which primary particles are aggregated by physical or chemical bonding between the primary particles even without an intentional aggregation or assembly process for the primary particles, that is, a secondary structure.

In addition, "single particle" means a single particle formed of only one primary particle, and "quasi-single particle" means a single particle formed of a plurality of primary particles.

The "primary particle" means a minimum particle unit distinguished as one lump when a cross-section of a positive electrode active material is observed through a scanning electron microscope (SEM), and may be composed of one crystal grain or may be composed of a plurality of crystal grains.

As the positive electrode active material for a lithium secondary battery of the present embodiment is composed of single particles, particle strength increases, thereby suppressing particle breakage during rolling, preventing cracks from occurring between primary particles as charging and discharging are repeated, and reducing an amount of gas generation due to side reactions with an electrolyte solution because of a small specific surface area. In addition, rolling density can be increased during electrode manufacture, thereby improving energy density of the electrode.

The positive electrode active material for a lithium secondary battery may have an average particle diameter (D50) of 5 to 8 µm, and more specifically 5.1 to 8 µm or 5.5 to 8 µm.

In the present specification, the average particle diameter (D50) may be defined as a particle diameter corresponding to 50% of a volume cumulative amount in a particle size distribution curve of particles. The average particle diameter (D50) may be measured, for example, using a laser diffraction method. The laser diffraction method generally makes it possible to measure a particle diameter ranging from a submicron region to several millimeters and to obtain results having high reproducibility and high resolution.

As the average particle diameter of the positive electrode active material is sufficiently large as in the above range, tap density can be further improved compared with conventional small-particle-diameter single particles, and as a result, electrode density can be greatly improved. However, when the average particle diameter of the positive electrode active material is too large, a movement path of lithium ions becomes long, thereby deteriorating electrochemical characteristics such as capacity and output, and therefore the upper limit is set as described above.

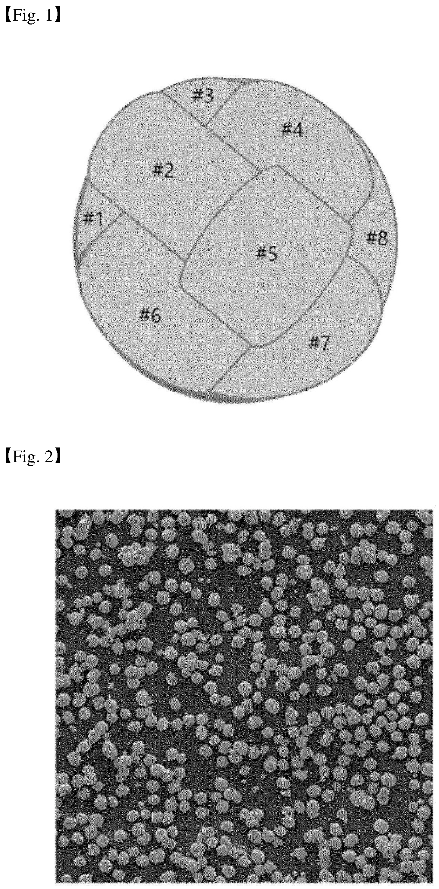

FIG. 1 is a schematic view of a quasi-single particle included in a positive electrode active material for a lithium secondary battery according to one embodiment.

Referring to FIG. 1, in the present embodiment, the quasi-single particle may be a spherical particle formed by overlapping a plurality of primary particles in a rod form.

In the present specification, "spherical" does not necessarily have to be a perfect sphere and is a concept including a substantially spherical shape. Such a single particle may have a shape similar to that of a volleyball.

Here, the single particles may include, on average, 5 to 15 primary particles, and more specifically 8 to 14 or 10 to 12 primary particles. At this time, the "single particles" has a meaning encompassing both single particles and quasi-single particles included in the positive electrode active material according to the present embodiment.

In the present specification, "average number of primary particles in a single particle" may be obtained by deriving an arithmetic average value of the number of primary particles visually observed for each of at least five arbitrary single particles in a (25 µm) × (20 µm) 2D image observed on an SEM (scanning electron microscope) image at 5,000× magnification. In the present specification, it should be noted that the "average number of primary particles in a single particle" means an average number of primary particles observed on an SEM image of a 2D image, not an average number of primary particles actually included in a single particle in a three-dimensional reality.

When the average number of primary particles included in the single particles is too small, a movement path of lithium ions becomes long, and electrochemical characteristics such as capacity, charge/discharge efficiency, and output may deteriorate. When the average number of primary particles included in the single particles is too large, characteristics become closer to those of polycrystals rather than single crystals, and capacity and charge/discharge efficiency may be excellent, but lifespan may deteriorate due to particle breakage caused by shrinkage and expansion of numerous primary particles during charging and discharging.

At this time, the average particle diameter (D50) of the primary particles included in the single particles may be 1 µm or less. When the average particle diameter (D50) of the primary particle diameter included in the single particles is sufficiently small within the above range, effects of improving capacity and charge/discharge efficiency can be more preferably implemented.

Meanwhile, the average aspect ratio of the primary particles included in the single particles may be in a range of 1.1 to 2.5.

In the present specification, "aspect ratio" may be defined as a ratio of the length of the longest side of a particle to the length of the shortest side of the particle, and "average aspect ratio" may be defined as an arithmetic average value of aspect ratios derived by measuring the lengths of the shortest side and the longest side, respectively, using software during SEM image measurement for particle shape analysis for at least 10 particles. As described above, the reason why the average aspect ratio of the primary particles is 1.1 or more and the shape of the primary particles is closer to a rod shape than a completely spherical shape is that surface energy differs depending on crystal planes and crystals tend to grow in a thermodynamically stable 003-plane direction. As the aspect ratio increases, there is an advantage of increasing particle strength. However, when the average aspect ratio of the primary particles is too large, there may be a problem of reduced capacity and efficiency due to an increased lithium diffusion distance.

The average circularity of the single particles may be 0.75 or more, and more specifically may be in a range of 0.8 to 1.0 or 0.8 to 0.9. When the average circularity satisfies the above range, a positive electrode active material for a lithium secondary battery having excellent electrode density can be implemented.

In the present specification, the average circularity of the single particles may be calculated as a square value of a ratio of a circumference length of a circle having the same area as the particle to a circumference length of the particle. For example, the circularity of a particle may be calculated by the following Mathematical Formula 1. [Mathematical Formula 1] $Circularity = 4 πA / {P}^{2}$

In Mathematical Formula 1, A is an area of the particle, and P is a circumference length of the particle.

The area and circumference length of the particle are observed by observing a cross-section of the active material with a scanning electron microscope (SEM).

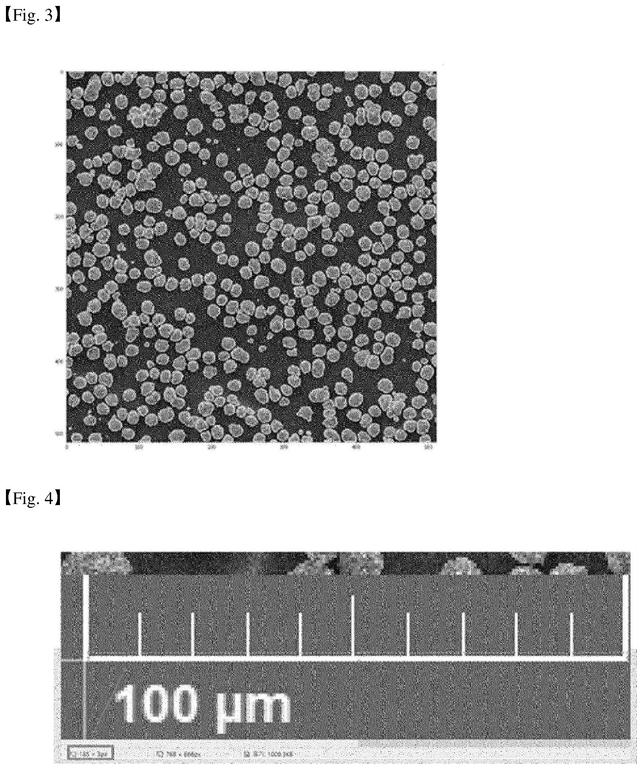

FIGS. 2 to 4 exemplarily show SEM images for explaining a circularity measurement method. Specifically, an image obtained by SEM as shown in FIG. 2 may be converted into an image in which a background and particles are separated as shown in FIG. 3 using a traditional image processing algorithm or a computer vision algorithm, and then the area and circumference of the particles may be measured using a contour algorithm.

At this time, the calculated pixel-based area (unit: pixel²) and circumference (unit: pixel) require calculation of a pixel value of a scale bar in order to convert them into the actual size of particles (unit: µm). The 185 pixels corresponding to the scale bar shown in FIG. 4 correspond to 100 microns, and the pixel value was converted into length to measure the area and circumference.

The positive electrode active material for a lithium secondary battery may have a tap density of 2.2 g/cm³ or more.

In the present specification, tap density may be measured using Geopyc 1365 (Micromeritics), which is generally used in the art as a method for measuring a degree of filling of a sample per unit volume. This can solve measurement errors by digitally reading values after compression with a constantly controlled force in a horizontal direction, in order to prevent errors that may occur when a person reads a scale after free fall (tapping) in a vertical direction in a conventional tap density measurement method.

This method may be a density (sample weight/volume) calculated through a changed volume change amount using a lateral axial pressure analysis option for measuring compressed bulk density of powder in compliance with ASTM D8097.

Since the tap density of the positive electrode active material is sufficiently high as described above, electrode energy density can be improved.

Meanwhile, the lithium transition metal oxide may contain nickel in an amount of 60 mol% or more, more specifically 70, 80, or 90 mol% or more, based on the total number of moles of transition metals. As nickel is included at such a high content, high-capacity characteristics can be implemented.

The lithium transition metal oxide may further include a grain-growth-promoting element consisting of Zr, Al, B, or a combination thereof. As the lithium transition metal oxide further includes the grain-growth-promoting element, a calcination temperature for forming the lithium transition metal oxide can be lowered, crystal defects such as an increase in a cation mixing ratio due to high-temperature calcination can be prevented, and the average particle diameter of the single particles can be efficiently increased during the calcination process.

The content of the grain-growth-promoting element may be 0.1 to 1 mol%, and more specifically 0.3 to 1 mol%, based on the total number of moles of transition metals. More specifically, the content of Zr may be 0.1 to 0.3 mol% based on the total number of moles of transition metals. In addition, the content of Al may be 0.2 to 0.8 mol% based on the total number of moles of transition metals. In addition, the content of B may be 0.1 to 0.8 mol% based on the total number of moles of transition metals.

When the content of the grain-growth-promoting element satisfies the above range, both the above-described effect according to introduction of the grain-growth-promoting element and an effect of preventing deterioration of electrochemical characteristics due to excessive introduction can be implemented.

The positive electrode active material may further include a coating layer including Co, Al, or a combination thereof on the lithium transition metal oxide. As the positive electrode active material further includes the coating layer having the above composition, side reactions with an electrolyte can be suppressed, structural stability of the active material can be improved, and lifespan characteristics of the battery can be further improved.

The lithium transition metal oxide according to the present embodiment may more specifically be represented by the following Chemical Formula 1.

[Chemical Formula 1] Liₐ[NiₓCo_{y}Mn_{z}M1_{w1}M2_{W2}]O₂

In Chemical Formula 1, 0.8≤a≤1.2, 0.60≤x<1, 0≤y≤0.4, 0≤z≤0.4, 0≤w1≤0.01, 0≤w2≤0.2, x+y+z+w1+w2=1, M1 is Zr, Al, B, or a combination thereof, and M2 is Y, Mg, Ti, Nb, W, Sc, Si, V, Fe, Y, Mo, Ce, Hf, Ta, La, Sr, or a combination thereof.

In the lithium transition metal oxide of Chemical Formula 1, lithium may be included in an amount corresponding to a, that is, 0.8≤a≤1.2. When a is too small, capacity may decrease, and when a is too large, strength of the calcined positive electrode active material may increase, thereby making pulverization difficult, and an amount of gas generation may increase due to an increase in lithium by-products. In consideration of an effect of improving capacity characteristics of the positive electrode active material according to control of the lithium content and a sinterability balance during manufacture of the active material, lithium may be more preferably included in an amount of 0.9≤a≤1.1.

In the lithium transition metal oxide of Chemical Formula 1, nickel may be included in an amount corresponding to x, that is, 0.6≤x<1, 0.6≤x≤0.97, 0.80≤x≤0.97, or 0.90≤x≤0.97. When the nickel content is too small, it may be difficult to achieve high capacity of a battery, and when the nickel content is too large, lifespan and safety of the battery may deteriorate due to decreased structural stability of the active material.

In the lithium transition metal oxide of Chemical Formula 1, cobalt may be included in an amount corresponding to y, that is, 0≤y≤0.4, 0≤y≤0.2, or 0≤y≤0.1. When the cobalt content is too small, it may be difficult to simultaneously achieve sufficient rate characteristics and high powder density of the active material. When the cobalt content is too large, the cost of raw materials may increase overall and reversible capacity may decrease.

In the lithium transition metal oxide of Chemical Formula 1, manganese may be included in an amount corresponding to z, that is, 0≤z≤0.4. When the manganese content is too small, production costs may increase and active material stability may decrease. When the manganese content is too large, capacity and output characteristics of the battery may deteriorate.

In the lithium transition metal oxide of Chemical Formula 1, M1 may be included in an amount corresponding to w1, that is, 0≤w1≤0.01. At this time, M1 is a grain-growth-promoting element and is Zr, Al, B, or a combination thereof.

In the lithium transition metal oxide of Chemical Formula 1, M2 may be included in an amount corresponding to w2, that is, 0≤w2≤0.2. At this time, M2 is another doping element and is Y, Mg, Ti, Nb, W, Sc, Si, V, Fe, Y, Mo, Ce, Hf, Ta, La, Sr, or a combination thereof.

### Method for Manufacturing Positive Electrode Active Material for Lithium Secondary Battery

A method for manufacturing a positive electrode active material for a lithium secondary battery according to another embodiment includes preparing a nickel-containing transition metal hydroxide; forming a mixture including the transition metal hydroxide and a lithium raw material and then performing main calcination to form a lithium transition metal oxide in which the number of primary particles has grown; post-calcining the lithium transition metal oxide; and pulverizing the post-calcined lithium transition metal oxide to form a single-particle lithium transition metal oxide, wherein the main calcination temperature is higher than the post-calcination temperature, and the average number of primary particles in the single particle may be 5 to 15 and the average circularity may be 0.75 or more.

Hereinafter, the method for manufacturing a positive electrode active material for a lithium secondary battery according to the present embodiment will be described step by step.

First, a nickel-containing transition metal hydroxide is prepared.

The transition metal hydroxide is a positive electrode active material precursor, and may be manufactured, for example, by adding a complexing agent-containing solution and a pH adjusting agent-containing solution to a transition metal-containing solution including a nickel raw material and optionally a cobalt raw material or a manganese raw material, thereby performing a coprecipitation reaction.

At this time, the average particle diameter (D50) of the transition metal hydroxide may be 5 µm or more. When the average particle diameter of the transition metal hydroxide satisfies the above range, a medium-particle-diameter single-particle lithium transition metal oxide targeted by the present embodiment can be easily obtained.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

The transition metal-containing solution may be prepared by adding the nickel raw material and optionally the cobalt raw material or the manganese raw material to a solvent, specifically water, or a mixture of water and an organic solvent uniformly miscible with water (for example, alcohol or the like).

The complexing agent-containing solution serves to form a complex, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing agent-containing solution may be used in the form of an aqueous solution, and in this case, water, or a mixture of water and an organic solvent uniformly miscible with water (for example, alcohol or the like) may be used as a solvent.

The pH adjusting agent-containing solution serves as a precipitant or pH adjuster, and may include an alkali compound such as a hydroxide of an alkali metal or alkaline earth metal, such as NaOH, KOH, or Ca(OH)₂, a hydrate thereof, or a combination thereof. Meanwhile, the pH adjusting agent-containing solution may also be used in the form of an aqueous solution, and in this case, water, or a mixture of water and an organic solvent uniformly miscible with water (for example, alcohol or the like) may be used as a solvent. At this time, the pH adjusting agent-containing solution may be added in an amount such that the pH of the reaction solution becomes 11 to 13.

The coprecipitation reaction may be performed under an inert atmosphere such as nitrogen or argon, at a temperature of 30 to 70°C, and at a pH of 11 to 13.

By the above process, particles of a nickel-cobalt-manganese(-doping element) hydroxide are generated and precipitated in the reaction solution. The precipitated precursor particles may be separated according to a conventional method, washed with water, and dried to obtain a precursor. The precursor may be secondary particles formed by aggregation of primary particles.

At this time, the molar ratio of nickel, cobalt, and manganese in the precursor may be controlled by controlling the concentrations of the nickel raw material, the cobalt raw material, and the manganese raw material.

Meanwhile, a doping element may be doped in the step of preparing the positive electrode active material precursor. In this case, the doping element may be doped into the precursor by further introducing a doping raw material into the transition metal-containing solution and performing a coprecipitation reaction.

Next, a mixture including the transition metal hydroxide and a lithium raw material is formed and then main-calcined to form a lithium transition metal oxide in which the number of primary particles has grown.

Thereafter, the grown lithium transition metal oxide is post-calcined.

In the method for manufacturing an active material according to the present embodiment, calcination is performed in two stages as described above, and at this time, the main calcination temperature is higher than the post-calcination temperature.

The number of primary particles in the single particle can be grown to an appropriate range through high-temperature main calcination. Through low-temperature post-calcination, rearrangement of crystals is induced, and internal stress increased during high-temperature main calcination is relieved, thereby reducing a nickel cation mixing phenomenon.

That is, as a conventional method for manufacturing single particles, a one-stage calcination method of high-temperature long-time calcination has problems in that a nickel cation mixing phenomenon occurs and a rocksalt impurity phase is generated. In contrast, in the present embodiment, the above problems can be prevented through high-temperature main calcination and low-temperature post-calcination, and the number of primary particles in the single particle can be appropriately grown to the above-described target range of the present embodiment.

Specifically, the main calcination temperature and the post-calcination temperature may each independently be 770 to 880°C, and more specifically, the main calcination temperature may be 850°C or higher, and the post-calcination temperature may be 800°C or lower. When each of the main calcination temperature and the post-calcination temperature satisfies the above range, the above-described two-stage calcination effect can be more preferably implemented.

In addition, the main calcination time may be shorter than the post-calcination time. That is, the main calcination time, which is high-temperature calcination, is shortened, and the post-calcination time, which is low-temperature calcination, is lengthened, so that the above-described two-stage calcination effect can be more preferably implemented.

Specifically, in the step of forming the lithium transition metal oxide, the main calcination time and the post-calcination time may each independently be 2 to 13 hours. More specifically, the main calcination time may be 6 hours or less, and the post-calcination time may be 8 hours or more. When the main calcination and post-calcination times satisfy the above ranges, the above-described two-stage calcination effect can be more preferably implemented.

In addition, the mixture may further include a grain growth promoter, which is a Zr raw material, an Al raw material, a B raw material, or a combination thereof. By further including the grain growth promoter, the calcination temperature can be further lowered, and the particle diameter of the single particles can be efficiently increased.

The content of the grain growth promoter may be 0.1 to 1 mol%, and more specifically 0.3 to 1 mol%, based on the total number of moles of transition metals in the transition metal hydroxide. More specifically, the content of the Zr raw material may be 0.1 to 0.3 mol% based on the total number of moles of transition metals in the transition metal hydroxide. In addition, the content of the Al raw material may be 0.2 to 0.8 mol% based on the total number of moles of transition metals in the transition metal hydroxide. In addition, the content of the B raw material may be 0.1 to 0.8 mol% based on the total number of moles of transition metals in the transition metal hydroxide. The technical significance according to adjustment of the content of the grain growth promoter is the same as described above, and thus description thereof is omitted.

As the lithium raw material, a lithium-containing sulfate, nitrate, acetate, carbonate, oxalate, citrate, halide, hydroxide, or oxyhydroxide may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The calcination may be performed under an oxygen or air atmosphere. When calcination is performed under the above atmosphere, local oxygen partial pressure may increase, thereby improving crystallinity of the positive electrode active material.

Meanwhile, another doping element may be doped in the step of forming the lithium transition metal oxide. In this case, the other doping element may be doped into the lithium transition metal oxide by further introducing another doping raw material during formation of the mixture and calcining the mixture.

Next, the post-calcined lithium transition metal oxide is pulverized to form a single-particle lithium transition metal oxide.

As a result, the single-particle positive electrode active material according to the present embodiment can be obtained, and the average number of primary particles included in the single particles may be 5 to 15, and the average circularity may be 0.75 or more. A specific description thereof is the same as described above.

As necessary, after the step of forming the single-particle lithium transition metal oxide, the method may further include a step of forming a coating layer including Co, Al, or a combination thereof.

More specifically, the coating layer may be formed by mixing the single-particle lithium transition metal oxide with a Co raw material, an Al raw material, or a combination thereof, and then performing heat treatment. The technical significance of forming the coating layer is the same as described above, and thus description thereof is omitted.

### Positive Electrode

Another embodiment includes a current collector and a positive electrode active material layer positioned on one surface of the current collector and including the positive electrode active material manufactured according to the above-described embodiment.

At this time, the rolling density of the positive electrode may be 3.55 g/cc or more, and more specifically may be in a range of 3.58 g/cc to 3.75 g/cc or 3.6 g/cc to 3.7 g/cc.

When the rolling density satisfies the above range, energy density of the lithium secondary battery can be remarkably improved. Accordingly, when the positive electrode according to the present embodiment is applied to an electric vehicle, a driving distance can be dramatically increased.

The characteristics of the positive electrode active material constituting the positive electrode active material layer are the same as described above. Therefore, a detailed description of the positive electrode active material will be omitted.

As the current collector, for example, stainless steel, aluminum, nickel, titanium, calcined carbon, or aluminum or stainless steel surface-treated with carbon, nickel, titanium, silver, or the like may be used.

Meanwhile, the positive electrode active material layer may include a binder and a conductive material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 to 30 wt% based on the total weight of the positive electrode active material layer.

In addition, the conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

### Lithium Secondary Battery

Still another embodiment provides a lithium secondary battery including the positive electrode.

Specifically, the lithium secondary battery may include a positive electrode, a negative electrode disposed to face the positive electrode, a separator interposed between the positive electrode and the negative electrode, and an electrolyte, and the positive electrode is the same as described above. In addition, the lithium secondary battery may optionally further include a battery case accommodating an electrode assembly including the positive electrode, the negative electrode, and the separator, and a sealing member sealing the battery case.

In the lithium secondary battery, the negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including the negative electrode active material and optionally including the binder and the conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

Next, depending on the type of lithium secondary battery, a separator may be present between the positive electrode and the negative electrode. As such a separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may also be used.

In addition, in the lithium secondary battery, the electrolyte may include an organic liquid electrolyte, an inorganic liquid electrolyte, a solid polymer electrolyte, a gel-type polymer electrolyte, a solid inorganic electrolyte, a molten inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte solution performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 to 2.0 M. When the concentration of the lithium salt is within the above range, the electrolyte has appropriate conductivity and viscosity, and thus excellent electrolyte performance can be exhibited and lithium ions can effectively move.

### [MODE FOR CARRYING OUT THE INVENTION]

Hereinafter, embodiments of the present invention will be described in detail. However, these are provided as examples, and the present invention is not limited thereto, and the present invention is only defined by the scope of the claims to be described below.

### Example 1

### (1) Manufacture of Positive Electrode Active Material

(Preparation of Transition Metal Hydroxide) A hydroxide having a composition of (Ni₀.₉₆Co₀.₀₃Mn₀.₀₁)(OH)₂ and an average particle diameter (D50) of 7 µm was manufactured according to a general coprecipitation method.

(Calcination) 200 g of the transition metal hydroxide, 90.556 g of LiOH·H₂O as a lithium raw material, 0.403 g of ZrO₂ and 0.850 g of Al(OH)₃ as grain growth promoters were mixed, followed by main calcination at a temperature of 860°C for 3.8 hours, and then post-calcination at a temperature of 790°C for 9.8 hours.

(Pulverization) Thereafter, the calcined product was pulverized to form a single-particle lithium transition metal oxide. At this time, in the lithium transition metal oxide, the number of moles of lithium (Li), zirconium (Zr), and aluminum (Al) relative to 1 mol of transition metals were 1.00, 0.0015, and 0.005 mol, respectively.

(Coating) Thereafter, 0.560 g of LiOH·H₂O, 2.504 g of Co(OH)₂, and 0.189 g of Al(OH)₃ were mixed with 130 g of the lithium transition metal oxide to prepare a mixture, and then the mixture was heat-treated at 650 to 700°C for 15 hours to manufacture a positive electrode active material in which a coating layer including 2 mol% of Co and 0.2 mol% of Al was formed on the surface.

### (2) Manufacture of Lithium Secondary Battery

A slurry for manufacturing an electrode plate was prepared by mixing the manufactured positive electrode active material, a conductive material (carbon black, Denka black), and a binder (PVDF, KF1100) at 96.5:1.5:2 wt%, and adding NMP (N-methyl-2-pyrrolidone) to adjust viscosity such that a solid content was about 30%. The prepared slurry was coated on a 15 µm-thick Al foil using a doctor blade, and then dried and rolled. The electrode loading amount was 15.0 mg/cm², and the rolling density (25°C, 20 kN) was 3.6 g/cm³.

As the electrolyte solution, an electrolyte solution obtained by adding 3.0 vol% VC based on the total amount of the electrolyte solution to 1 M LiPF₆ in EC:DMC:EMC=3:4:3 (vol%) was used, and a coin cell was manufactured using a PP separator and a lithium negative electrode (200 µm, Honzo metal).

### Examples 2 to 6

Positive electrode active materials and lithium secondary batteries were manufactured in the same manner as in Example 1, except that the amounts of LiOH·H₂O as a lithium raw material and ZrO₂, Al(OH)₃, and B(OH)₃ as grain growth promoters, and the calcination temperature and calcination time conditions of main calcination and post-calcination in the calcination step were adjusted as shown in Table 1.

### Comparative Example 1

A positive electrode active material and a lithium secondary battery were manufactured in the same manner as in Example 1, except that, in the step of preparing the transition metal hydroxide, a hydroxide having a composition of (Ni₀.₉₆Co₀.₀₃Mn₀.₀₁)(OH)₂ and an average particle diameter (D50) of 4 µm was manufactured, and the amounts of LiOH·H₂O as a lithium raw material and ZrO₂ and Al(OH)₃ as grain growth promoters, and the calcination temperature and calcination time conditions of main calcination and post-calcination in the calcination step were adjusted as shown in Table 1.

### Comparative Examples 2 to 6

Positive electrode active materials and lithium secondary batteries were manufactured in the same manner as in Example 1, except that the amounts of LiOH·H₂O as a lithium raw material and ZrO₂ and Al(OH)₃ as grain growth promoters, and the calcination temperature and calcination time conditions of main calcination and post-calcination in the calcination step were adjusted as shown in Table 1.

Table 1 below summarizes active material manufacturing conditions of the Examples and Comparative Examples.

**[Table 1]**

| Classification | LiOH·H₂O (based on 1 mol of transition metals) | ZrO₂ (based on 1 mol of transition metals) | Al(OH)₃ (based on 1 mol of transition metals) | B(OH)₃ (based on 1 mol of transition metals) | Precursor Average Particle Diameter (µm) | Main Calcination Temperatur e (°C) | Main Calcination Time (h) | Post-Calcination Temperature (°C) | Post-Calcination Time (h) |
|---|---|---|---|---|---|---|---|---|---|
| Example 1 | 1.00 | 0.0015 | 0.005 | - | 7 | 860 | 3.8 | 790 | 9.8 |
| Example 2 | 1.01 | 0.0015 | 0.005 | - | 7 | 860 | 3.8 | 790 | 9.8 |
| Example 3 | 1.00 | 0.0015 | 0.005 | - | 7 | 850 | 3.8 | 790 | 9.8 |
| Example 4 | 1.01 | 0.0015 | 0.005 | 0.001 | 7 | 850 | 3.8 | 790 | 9.8 |
| Example 5 | 1.01 | 0.0015 | 0.005 | - | 7 | 850 | 5.7 | 790 | 9.0 |
| Example 6 | 1.03 | 0.0015 | 0.005 | - | 7 | 860 | 3.8 | 790 | 9.8 |
| Comparative Example 1 | 1.02 | 0.0015 | 0.005 | - | 4 | 830 | 3.8 | 740 | 9.8 |
| Comparative Example 2 | 1.01 | 0.0015 | 0.005 | - | 7 | 840 | 3.8 | 790 | 9.8 |
| Comparative Example 3 | 1.02 | 0.0015 | 0.005 | - | 7 | 860 | 8.8 | 790 | 9.8 |
| Comparative Example 4 | 1.00 | 0.0015 | 0.005 | | 7 | 820 | 3.8 | 850 | 9.8 |
| Comparative Example 5 | 1.00 | 0.0015 | 0.005 | | 7 | 860 | 9 | 790 | 4 |
| Comparative Example 6 | 1.00 | 0.0015 | 0.005 | | 7 | 850 | 10 | - | - |

### Experimental Example 1: Observation of SEM Images of Active Material

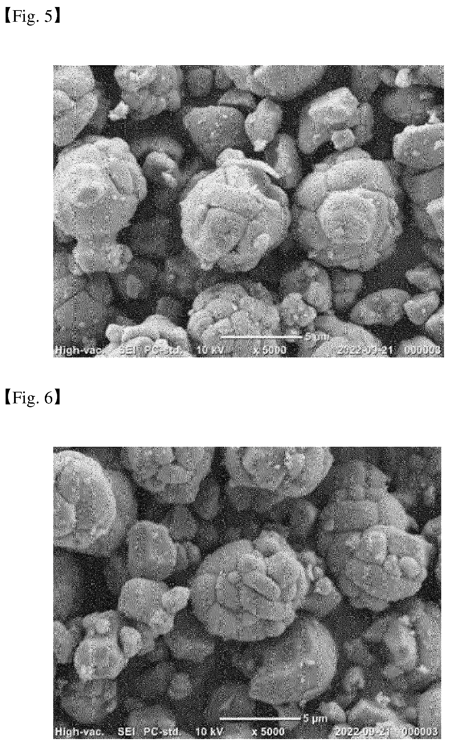

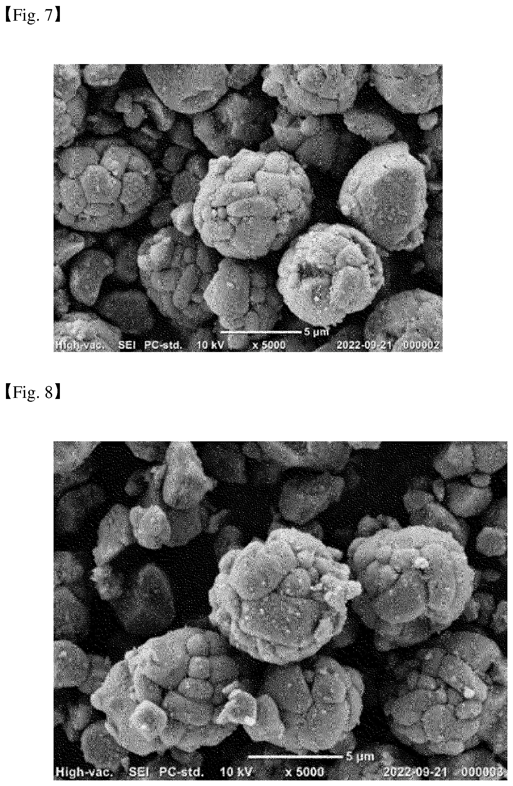

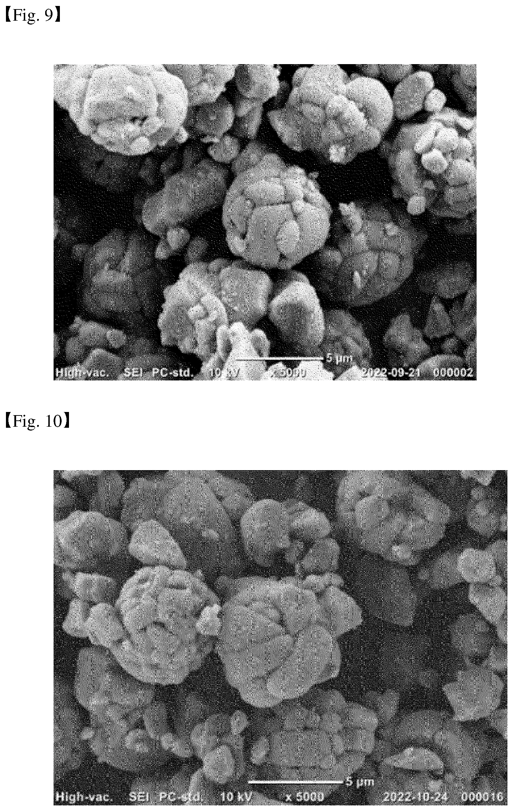

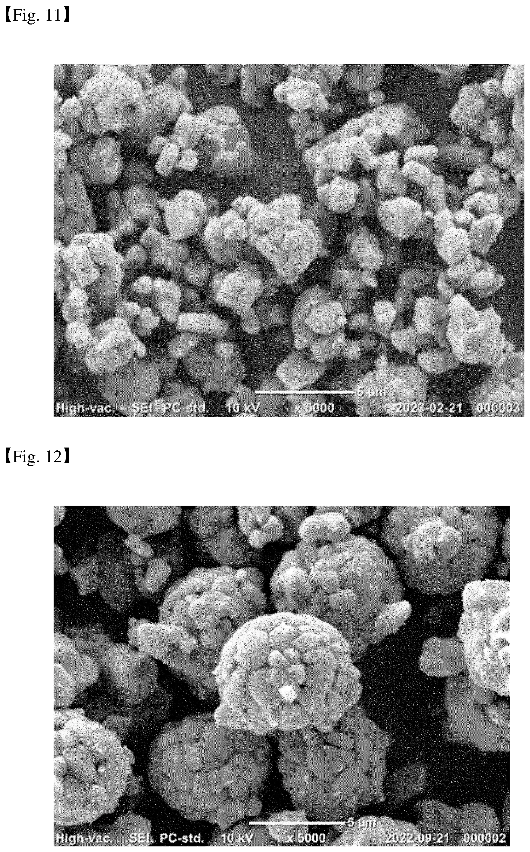

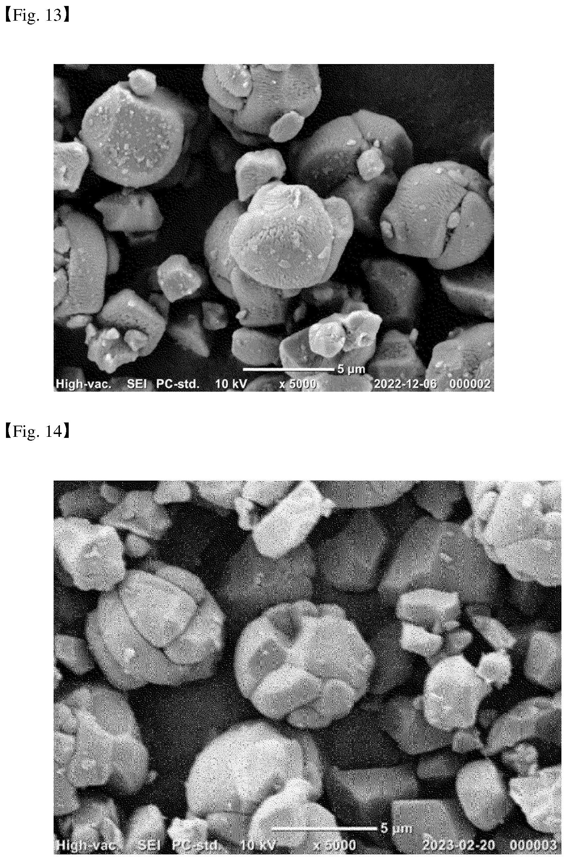

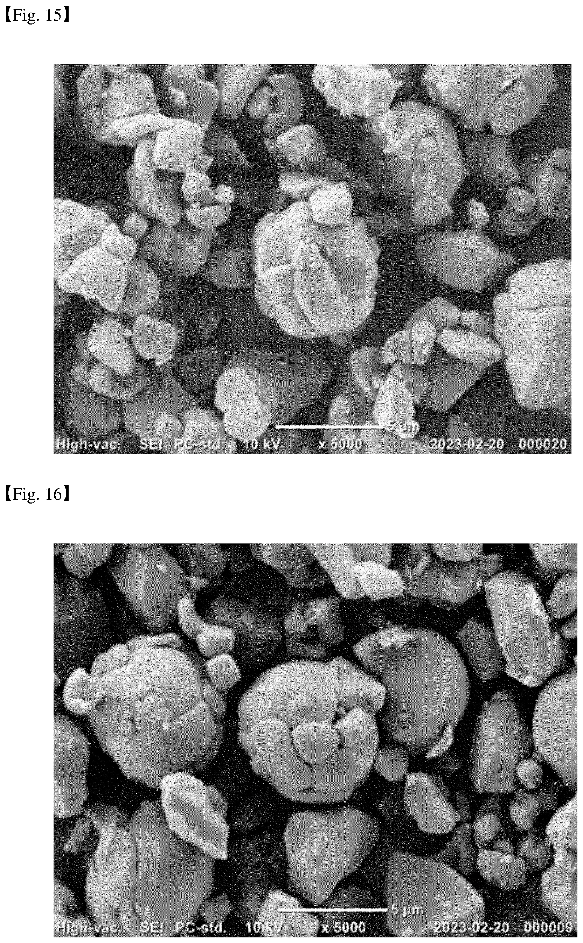

SEM (scanning electron microscope) images of the positive electrode active materials manufactured according to the Examples and Comparative Examples were observed, and are shown in FIGS. 5 to 16 in the order of Examples 1 to 6 and Comparative Examples 1 to 6, respectively.

Referring to FIGS. 5 to 16, it was confirmed that the active materials according to the Examples and Comparative Examples had a single-particle shape, not a form in which several tens to several hundreds of primary particles are aggregated, which is classified as a conventional general secondary-particle shape.

It was confirmed that the single particles of Examples 1 to 6 did not include too few or too many primary particles and had an average particle diameter of an appropriate size.

In contrast, it was confirmed that the single particles of Comparative Example 1 had a somewhat small average particle diameter. It was confirmed that the single particles of Comparative Example 2 had a significantly large number of primary particles included in the single particles. It was confirmed that the single particles of Comparative Example 3 had a significantly small number of primary particles included in the single particles.

### Experimental Example 2: Evaluation of Physical Properties of Active Material

Physical properties of the positive electrode active materials manufactured according to the Examples and Comparative Examples were evaluated, and the results are shown in Table 2 below. Specific experimental methods are as follows.

### (1) Evaluation of Average Number of Primary Particles in Single Particle

After (25 µm) × (20 µm) 2D images observed on SEM (scanning electron microscope) images at 5,000× magnification were taken at 5 points per sample, an arithmetic average value of the number of primary particles visually observed for each of at least 5 arbitrary single particles per point was derived.

### (2) Measurement of Average Circularity

The average circularity of the particles was calculated by the following Mathematical Formula 1. [Mathematical Formula 1] $Circularity = 4 πA / {P}^{2}$

In Mathematical Formula 1, A is an area of the particle, and P is a circumference length of the particle.

The area and circumference length of the particle were measured using an image obtained by measuring a cross-section of the active material with a scanning electron microscope (SEM).

### (3) Evaluation of Tap Density

In compliance with ASTM D8097, 10 g of active material powder was placed in a piston container using Geopyc 1365 (Micromeritics), and compressed bulk density was measured by applying axial pressure in a lateral direction.

### (4) Evaluation of Average Particle Diameter (D50)

With respect to active material powder, a particle diameter corresponding to 50% of a volume cumulative amount was measured using a laser diffraction method.

### (5) Evaluation of Rolling Density (9 tons)

Density after applying a pressure of 9 tons was evaluated. Specifically, 3 g of an active material sample was loaded in a pellet having a diameter of 13 mm, and a pressure of 9 tons was applied using a hydraulic press manufactured by Carver. Thereafter, the density may be measured through a change in height of the pellet before and after pressure application, and a specific calculation formula is as follows. [Calculation Formula 1] 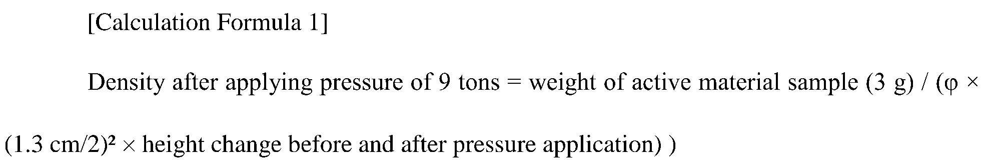 Density after applying pressure of 9 tons = weight of active material sample (3 g) / (φ × (1.3 cm/2)2 × height change before and after pressure application) )

**[Table 2]**

| Classification | Average Number of Primary Particles in Single Particle | Average Circularity | Tap Density (g/cc) | Average Particle Diameter (D50, µm) |
|---|---|---|---|---|
| Example 1 | 10 | 0.81 | 2.574 | 5.18 |
| Example 2 | 11 | 0.82 | 2.544 | 5.84 |
| Example 3 | 12 | 0.83 | 2.578 | 5.78 |
| Example 4 | 11 | 0.83 | 2.583 | 5.54 |
| Example 5 | 10 | 0.80 | 2.526 | 5.82 |
| Example 6 | 10 | 0.80 | 2.305 | 5.51 |
| Comparative Example 1 | - | 0.51 | 1.73 | 4.13 |
| Comparative Example 2 | 20 | 0.82 | 2.585 | 6.01 |
| Comparative Example 3 | 3 | 0.70 | 2.313 | 5.44 |
| Comparative Example 4 | 4 | 0.69 | 2.331 | 5.53 |
| Comparative Example 5 | 3 | 0.65 | 2.312 | 5.65 |
| Comparative Example 6 | 4 | 0.66 | 2.321 | 5.46 |

Referring to Table 2, it was confirmed that, in the positive electrode active materials of Examples 1 to 6, in which process conditions were appropriately controlled and the average circularity satisfied the range of the present embodiment, the average number of primary particles was appropriately obtained within the target range. In contrast, in the case of Comparative Example 1, in which the average particle diameter of the transition metal hydroxide precursor was too small and the average circularity value was about 0.5, it was confirmed that the average particle diameter of the single particles was obtained to be small at 4.13 µm, and accordingly, tap density was also lowered.

In addition, in the case of Comparative Example 2, in which the main calcination temperature was too low, it was confirmed that the circularity was excellent, but the average number of primary particles in the single particle was obtained to be too large.

In addition, in the case of Comparative Example 3, in which the main calcination time was too long, it was confirmed that the circularity was outside the range of the present embodiment and the average number of primary particles in the single particle was obtained to be too small.

In addition, in the case of Comparative Example 4, in which the post-calcination temperature was higher than the main calcination temperature, Comparative Example 5, in which the post-calcination time was shorter than the main calcination time, and Comparative Example 6, in which only long-time main calcination was performed without post-calcination, it was confirmed that the average circularity was far outside the range of the present embodiment, and the average number of primary particles in the single particle was obtained to be too small.

### Experimental Example 3: Evaluation of Electrochemical Characteristics of Battery

Electrochemical characteristics of lithium secondary batteries manufactured according to the Examples and Comparative Examples were evaluated, and the results are shown in Table 3 below. Specific experimental methods are as follows.

### (1) Evaluation of Initial Charge and Discharge Capacity and Initial Efficiency

After lithium secondary battery half cells were manufactured and aged at 25°C for 12 hours, a charge/discharge test was performed. For initial capacity evaluation, 200 mAh/g was used as a reference capacity, and charging was performed to 4.25 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

### (2) Evaluation of High-Temperature Lifespan Retention Rate (45°C, 50 cycles)

The high-temperature lifespan retention rate was evaluated at 45°C by charging to 4.25 V at a constant current of 0.5 C, switching to constant voltage, and continuing charging until the end current reached 0.05 C. After charging, a rest time of 10 minutes was provided, and discharge was performed to 2.5 V at a constant current of 1.0 C. Charging and discharging were performed 50 times under such charge/discharge conditions, and a capacity retention rate of the 50th cycle relative to the first cycle was calculated.

### (3) Evaluation of High-Temperature Resistance Increase Rate (45°C, 50 cycles)

The high-temperature resistance increase rate was evaluated at 45°C by charging to 4.25 V at a constant current of 0.5 C, switching to constant voltage, and continuing charging until the end current reached 0.05 C. After charging, a rest time of 10 minutes was provided, and discharge was performed to 2.5 V at a constant current of 1.0 C. Charging and discharging were performed 50 times under such charge/discharge conditions, and a resistance increase rate of the 50th cycle relative to the first cycle was calculated.

**[Table 3]**

| Classification | Rolling Density (g/cc)@9 tons | Charge Capacity (mAh/g, 0.1C) | Discharge Capacity (mAh/g, 0.1C) | Initial Efficiency (%) | High-Temperature Lifespan Retention Rate (%, 50 cycles) | High-Temperature Resistance Increase Rate (%, 50 cycles) |
|---|---|---|---|---|---|---|
| Example 1 | 3.63 | 243.2 | 212.1 | 87.2 | 93.4 | 71.5 |
| Example 2 | 3.63 | 243.8 | 210.9 | 86.5 | 92.7 | 88.1 |
| Example 3 | 3.66 | 244.3 | 213.5 | 87.4 | 92.9 | 66.2 |
| Example 4 | 3.62 | 241.7 | 208.8 | 86.4 | 92.5 | 90.5 |
| Example 5 | 3.61 | 241.8 | 208.7 | 86.3 | 93.8 | 70.1 |
| Example 6 | 3.62 | 243.5 | 212.2 | 87.2 | 93.0 | 77.0 |
| Comparative Example 1 | 3.30 | 243.4 | 216.7 | 89.0 | 91.5 | 76.1 |
| Comparative Example 2 | 3.65 | 241.8 | 212.3 | 87.8 | 91.1 | 100.3 |
| Comparative Example 3 | 3.51 | 237.9 | 203.4 | 85.5 | 93.1 | 86.4 |
| Comparative Example 4 | 3.49 | 237.6 | 203.5 | 85.6 | 93.0 | 87.5 |
| Comparative Example 5 | 3.50 | 238.0 | 200.1 | 84.1 | 91.5 | 96.2 |
| Comparative Example 6 | 3.53 | 237.4 | 198.1 | 83.4 | 91.1 | 95.5 |

Referring to Table 3, in the case of Examples 1 to 6, in which the average particle diameter of the single particles, the average number of primary particles included in the single particles, and the like were appropriately controlled, it was confirmed that the tap density was high, the rolling density satisfied the range of the present embodiment, and electrochemical characteristics including capacity, efficiency, and high-temperature lifespan characteristics were all generally excellent. In contrast, as described above, in the case of Comparative Example 1, in which the average particle diameter of the single particles was too small, electrochemical characteristics were similar to those of the Examples, but the tap density was too low, and thus it can be seen that the compression density was outside the range of the present embodiment.

In the case of Comparative Example 2, in which the average number of primary particles included in the single particles was too large, capacity and charge/discharge efficiency were similar to those of the Examples, but it was confirmed that high-temperature lifespan characteristics were remarkably deteriorated.

In the case of Comparative Examples 3, 4, 5, and 6, in which the average number of primary particles included in the single particles was too small, high-temperature lifespan characteristics were similar to those of the Examples, but it was confirmed that capacity and charge/discharge efficiency were remarkably deteriorated.

In summary, the technical gist of the present embodiment is that the average particle diameter of the single particles is appropriately controlled to implement improvement in tap density and electrode density, and the average number of primary particles included in the single particles is appropriately controlled to excellently implement comprehensive electrochemical characteristics including capacity and lifespan characteristics.

The present invention is not limited to the above embodiments and may be manufactured in various different forms. A person having ordinary skill in the art to which the present invention pertains will understand that the present invention may be embodied in other specific forms without changing the technical spirit or essential features of the present invention. Therefore, the above-described embodiments should be understood as illustrative in all respects and not restrictive.

## Claims

1. A positive electrode active material for a lithium secondary battery, the positive electrode active material being a nickel-containing layered lithium transition metal oxide,
wherein the positive electrode active material is composed of single particles including at least one of a single particle formed of one primary particle and a quasi-single particle formed by aggregation of a plurality of the primary particles,
wherein the single particles include, on average, 5 to 15 primary particles,
wherein an average particle diameter (D50) is 5 µm to 8 µm, and
wherein an average circularity is 0.75 or more.

2. The positive electrode active material for a lithium secondary battery of claim 1,
wherein an average aspect ratio of primary particles included in the single particles is in a range of 1.1 to 2.5.

3. The positive electrode active material for a lithium secondary battery of claim 1,
wherein the average circularity is in a range of 0.75 to 0.8.

4. The positive electrode active material for a lithium secondary battery of claim 1,
wherein a tap density is 2.2 g/cm³ or more.

5. The positive electrode active material for a lithium secondary battery of claim 1,
wherein the lithium transition metal oxide contains nickel in an amount of 60 mol% or more based on a total number of moles of transition metals.

6. The positive electrode active material for a lithium secondary battery of claim 1,
wherein the lithium transition metal oxide further comprises a grain-growth-promoting element consisting of Zr, Al, B, or a combination thereof.

7. The positive electrode active material for a lithium secondary battery of claim 6,
wherein a content of the grain-growth-promoting element is 0.1 to 1 mol% based on a total number of moles of transition metals.

8. The positive electrode active material for a lithium secondary battery of claim 1,
wherein the positive electrode active material further comprises a coating layer including Co, Al, or a combination thereof on the lithium transition metal oxide.

9. The positive electrode active material for a lithium secondary battery of claim 1,
wherein the lithium transition metal oxide is represented by the following Chemical Formula 1:
[Chemical Formula 1] Liₐ[NiₓCo_{y}Mn_{z}M1_{w1}M2_{W2}]O₂
wherein, in Chemical Formula 1, 0.8≤a≤1.2, 0.60≤x<1, 0≤y≤0.4, 0≤z≤0.4, 0≤w1≤0.01, 0≤w2≤0.2, x+y+z+w1+w2=1, M1 is Zr, Al, B, or a combination thereof, and M2 is Y, Mg, Ti, Nb, W, Sc, Si, V, Fe, Y, Mo, Ce, Hf, Ta, La, Sr, or a combination thereof.

10. A positive electrode for a lithium secondary battery, comprising:
a current collector; and
a positive electrode active material layer positioned on at least one surface of the current collector and comprising the positive electrode active material of any one of claims 1 to 10,
wherein a rolling density is 3.55 g/cc or more.

11. A lithium secondary battery comprising the positive electrode for a lithium secondary battery of claim 10.
